# EUROPÄISCHE PATENTANMELDUNG

(11) **EP 4 299 855 A1**
(43) Veröffentlichungstag der Anmeldung: **03.01.2024**
(21) Anmeldenummer: 22181498.1
(22) Anmeldetag: 28.06.2022
(51) Int. Cl.: E04G 5/00, G06Q 10/08, G06F 30/13, G06K 19/07, G06F 111/18

(54) **VERFAHREN UND SYSTEM ZUR ERFASSUNG EINES AUFBAUS EINES GERÜSTS**

(71) Anmelder: Mahlo, Axel, 10243 Berlin (DE)
(72) Erfinder: RAICH, Gerd Jochen, 8010 Graz (AT); MAHLO, Alex, Berlin 10243 (DE)
(74) Vertreter: Schwarz & Partner Patentanwälte GmbH

(57) **Zusammenfassung**

Das Verfahren zur Erfassung eines Aufbaus eines Gerüsts (1) umfasst das:
Bereitstellen von Gerüstbauteilen (2-6),
Befestigen von RFID Elementen (10) an den Gerüstbauteilen (2-6), wobei in den RFID Elementen (10) Artikelstammdaten betreffend das zugehörige Gerüstbauteil (2-6) gespeichert werden,
Bereitstellen eines tragbaren RFID Lesers (12), der zum Auslesen der in den RFID Elementen (10) gespeicherten Artikelstammdaten innerhalb seiner Erfassungsreichweite (13) ausgebildet ist,
Bereitstellen einer mit dem RFID Leser (12) kommunizierenden Rechnereinheit (20), Aufbauen des Gerüsts (1) mit den Gerüstbauteilen (2-6) durch Gerüstbauer (11), die mit dem RFID Leser (12) ausgestattet sind,
Auslesen der in den RFID Elementen (10) gespeicherten Artikelstammdaten während des Aufbauens des Gerüsts (1) und Übertragen der ausgelesenen Artikelstammdaten an die Rechnereinheit (20),
Ermitteln der beim Aufbau des Gerüsts (1) verwendeten Gerüstbauteile (2-6) und ihre Verbindung untereinander aus den empfangenen Artikelstammdaten und Erstellen eines virtuellen Abbildes des Gerüsts (1) aus den ermittelten Gerüstbauteilen (2-6) mittels der Rechnereinheit (20).

## Beschreibung

Die Erfindung betrifft ein Verfahren zur Erfassung eines Aufbaus eines Gerüsts mittels eines virtuellen Abbilds des Gerüsts. Die Erfindung betrifft des Weiteren ein System zur Erfassung eines Aufbaus eines Gerüsts.

Auf dem Gebiet der Bautechnik sind Gerüste ein fester Bestandteil der Errichtung oder Renovierung von Gebäuden oder Industrieanlagen. Moderne Gerüste umfassen eine Vielzahl verschiedener Gerüstbauteile, welche im Zuge des Aufbaus des Gerüsts in einem Baukastensystem verbunden werden. Auf diese Weise können Gerüste an die Anforderungen auf verschiedenen Baustellen angepasst werden, wobei Gerüste sehr große Höhen erreichen können.

Eine Herausforderung beim Gerüstbau liegt darin, dass Gerüste gemäß einem vorgegebenen Konstruktionsplan oder Errichtungsschema errichtet werden müssen, um eine notwendige Standsicherheit zu gewährleisten. Der korrekte Aufbau des Gerüsts wird im Rahmen eines Standsicherheitsnachweises erbracht, in welchen unter anderem Herstellerinformationen, Typenprüfungen und geltende Normen einzubeziehen sind. Vor allem bei sehr großen Gerüsten auf Großbaustellen wird das Gerüst jedoch kontinuierlich erweitert, wobei andere Teile des Gerüsts zum Teil sogar während der Bauphase wieder abgebaut werden. Dennoch muss sichergestellt werden, dass das Gerüst zu jeder Zeit die notwendigen Anforderungen an die Standsicherheit erfüllt.

Eine weitere Herausforderung im modernen Gerüstbau liegt im Asset Management einer Baustelle begründet. Um einen reibungslosen Ablauf auf der Baustelle zu gewährleisten, ist es vorteilhaft, wenn jederzeit aktuelle Informationen über die Materialauslastung und die Materialzusammensetzung auf der Baustelle vorliegen. Dies ist auch für das Bauprojektmanagement essenziell, sodass Baufortschrittsmeldungen erstellt, eine Mannschaftsplanung durchgeführt, und Performance Indikatoren für verschiedene Gewerke und/oder beteiligte Firmen generiert werden können. Auch die Rechnungsstellung ist auf großen Baustellen mitunter sehr komplex, sodass eine automatische, einheitliche Erfassung von Material einschließlich einer Freigabe zur Benutzung wünschenswert ist. Auch eine Vermietung des Gerüstes an einzelne Gewerke, sowie eine individuelle Rechnungsstellung hierfür sind auf modernen Baustellen wünschenswert oder notwendig.

Dies ist mit aus dem Stand der Technik bekannten Gerüsten nicht oder nur mit großem Aufwand möglich.

Der Erfindung liegt die daher Aufgabe zugrunde ein Verfahren und ein System zur Erfassung eines Aufbaus eines Gerüsts bereitzustellen, welche die Nachteile des Standes der Technik vermeiden.

Die Erfindung löst die gestellte Aufgabe durch ein Verfahren zur Erfassung eines Aufbaus eines Gerüsts, umfassend die Schritte:
Bereitstellen von Gerüstbauteilen,
Befestigen von RFID Elementen an den Gerüstbauteilen, wobei in den RFID Elementen vor oder nach ihrem Befestigen an den Gerüstbauteilen Artikelstammdaten betreffend das zugehörige Gerüstbauteil gespeichert werden,
Bereitstellen zumindest eines tragbaren RFID Lesers, der zum Auslesen der in den RFID Elementen gespeicherten Artikelstammdaten innerhalb seiner Erfassungsreichweite ausgebildet ist,
Bereitstellen einer Rechnereinheit, die zur drahtlosen Kommunikation mit dem zumindest einen RFID Leser ausgebildet ist,
Aufbauen des Gerüsts mit den Gerüstbauteilen durch Gerüstbauer, wobei zumindest ein Gerüstbauer mit dem RFID Leser ausgestattet ist,
Auslesen der in den RFID Elementen der Gerüstbauteile gespeicherten Artikelstammdaten während des Aufbauens des Gerüsts und Übertragen der ausgelesenen Artikelstammdaten an die Rechnereinheit,
Ermitteln der beim Aufbau des Gerüsts verwendeten Gerüstbauteile und ihrer Verbindung untereinander aus den von dem zumindest einen RFID Leser empfangenen Artikelstammdaten und Erstellen eines virtuellen Abbildes des Gerüsts aus den ermittelten Gerüstbauteilen mittels der Rechnereinheit.

Wenn das virtuelle Abbild des Gerüsts in einem über ein Computernetzwerk oder eine Datenfernverbindung zugänglichen Datenspeicher, vorzugsweise einem Cloud-Speicher, bereitgestellt wird, kann es durch am Bauprojekt beteiligte Personen und Unternehmen verwendet und in vielfacher Weise ausgewertet werden. Beispielsweise können damit erforderliche Berichte und Unterlagen erstellt werden, statische Überprüfungen und Dokumentierungen durchgeführt werden, Inventurmaßnahmen und Verrechnungen für die Benützung der Gerüstbauteile vorgenommen werden.

Die Verwendungs- und Auswertungsmöglichkeiten des virtuellen Abbilds des Gerüsts werden erweitert, wenn die Artikelstammdaten zumindest die Art des Gerüstbauteils und/oder seine Länge sowie optional administrative Daten, wie z.B. den Hersteller und das Produktionsdatum des Gerüstbauteils umfassen.

Gerüstbauteile werden üblicherweise nach nationalen oder internationalen Standards gefertigt. Solche Standards geben vor, welche Arten von Gerüstbauteilen zur Verfügung gestellt werden können, wie beispielsweise Stiele, das sind vertikal anzuordnende rohrförmige Träger, die als "vertikale Stiele" bezeichnet werden, Rahmenträger, diagonal anzuordnende Elemente, sogenannte "Diagonalen oder Diagonalelemente", die als Fachwerkelemente Lasten nicht direkt tragen, sondern nur an andere Gerüstbauteile weiterleiten, Träger, insbesondere horizontale Träger, sogenannte horizontale Riegel, Gerüstfüße, Fußspindeln, Kopfspindeln, Decks, Durchstiege, Leitern, etc. Die Standards geben auch die Länge von zumindest einigen der genannten Gerüstbauteile vor, sowie Rasterabstandsmaße, in denen Gerüstbauteile miteinander verbindbar sein sollen. Um solche Rasterabstandsmaße einzuhalten, haben Gerüstbauteile, wie z.B. Stiele, Träger und Rahmenträger, meist mehrere, in Rasterabstandsmaßen voneinander beabstandete Verbindungspunkte, an denen sie mit anderen Gerüstbauteilen verbindbar sind. Beispielsweise weisen zur vertikalen Anordnung vorgesehene Stiele und Rahmenträger Verbindungspunkte zur Verbindung mit horizontalen Riegeln oder Diagonalelementen auf. Aus diesem Grund sieht eine bevorzugte Ausführungsform der Erfindung vor, dass zumindest einige der Gerüstbauteile mit mehreren RFID Elementen versehen werden, die an oder nahe von vordefinierten Verbindungspunkten der Gerüstbauteile mit anderen Gerüstbauteilen angeordnet werden, wobei optional eine Kennzeichnung des Verbindungspunkts, dem das RFID Element zugeordnet ist, in den Artikelstammdaten des RFID Elements hinterlegt wird. Die Verbindungspunkte werden auf dem Gebiet des Gerüstbaus auch als Knotenpunkte oder System-Anschlusspunkte bezeichnet. In weiterer Ausgestaltung dieser Ausführungsform der Erfindung ist vorgesehen, dass die Erfassungsreichweite des RFID Lesers so konfiguriert ist, dass er jeweils nur eine begrenzte Anzahl, z.B. nur eines, von mehreren an einem Gerüstbauteil angebrachten RFID Elementen erfassen kann. Dadurch wird die Erstellung des virtuellen Abbilds des Gerüsts erleichtert, weil eindeutig festgelegt bzw. einfach über die Auswertungssoftware ermittelbar ist, welcher Verbindungspunkt eines Gerüstbauteils vom RFID Leser erfasst wurde und mit welchen anderen Gerüstbauteilen an dieser Stelle eine Verbindung möglich ist.

In einer bevorzugten Ausführungsform des erfindungsgemäßen Verfahrens zur Erfassung eines Aufbaus eines Gerüsts ist bei der Erstellung des virtuellen Abbilds des Gerüsts eine Plausibilitätsprüfung vorgesehen, indem beim Erstellen des virtuellen Abbildes des Gerüsts berücksichtigt wird, welche Arten von Gerüstbauteilen miteinander und gegebenenfalls an welchen Verbindungspunkten verbindbar sind und in welcher Lage die Arten von Gerüstbauteilen im Gerüst eingebaut werden können, wobei bei der Erstellung des virtuellen Abbildes des Gerüsts nur jene Gerüstbauteile berücksichtigt werden, die diese Kriterien erfüllen. Die zur Durchführung dieser Plausibilitätsprüfung erforderliche Information über die Verbindbarkeit der Gerüstbauteile und die möglichen Lagen der Gerüstbauteile können in einer Datenbank gespeichert sein, auf die beim Erstellen des virtuellen Abbildes des Gerüsts zugegriffen wird. Diese Information kann auch in vordefinierten Algorithmen hinterlegt sein, die beim Erstellen des virtuellen Abbildes des Gerüsts in der Rechnereinheit ausgeführt werden. Schließlich kann diese Information auch durch auf künstliche Intelligenz beruhenden, insbesondere selbstlernenden Programmen, die in der Rechnereinheit ausgeführt werden, erzeugt werden. Bei der Ausführung der Algorithmen oder der auf künstlicher Intelligenz beruhenden Programmen suchen diese Programme nach Evidenz für das Vorhandensein von Anbauteilen. In einer weiteren Ausführungsform der Erfindung ist vorgesehen, dass zusätzliche Informationen an die Programme manuell übermittelt werden. Beispielsweise kann es beim Aufbau des Gerüsts aus baulichen Gründen notwendig sein, ein Diagonalelement nicht direkt am Verbindungspunkt eines vertikalen Stiels oder horizontalen Riegels angreifen zu lassen. Ein solcher vom Standard abweichender Anbau kann dann manuell überprüft und in das virtuelle Abbild des Gerüsts übernommen werden. Aus den Artikelstammdaten können auch weitere Plausibilitätsprüfungen definiert werden.

Damit für die Erstellung des virtuellen Abbilds des Gerüsts nur jene Gerüstbauteile berücksichtigt werden, die tatsächlich schon in das Gerüst eingebaut sind, nicht aber solche Gerüstbauteile, die noch zu ihrer Anbauposition transportiert werden (vom Gerüstbauer getragen, oder von Kränen bewegt) ist in einer weiteren Ausführungsform der Erfindung vorgesehen, dass beim Erstellen eines virtuellen Abbildes des Gerüsts aus den ermittelten Gerüstbauteilen nur solche Gerüstbauteile berücksichtigt werden, die sich in Bezug aufeinander nicht wesentlich bewegen oder in Ruhe zueinander sind, was vorzugsweise durch mehrfaches Einlesen der Artikelstammdaten der RFID Elemente im zeitlichen Abstand und Vergleich der eingelesenen Artikelstammdaten festgestellt wird. Dabei werden RFID Elemente, deren Artikelstammdaten erstmals eingelesen werden oder die nicht mehr erfasst werden können, als das Kriterium des nicht wesentlich Bewegens des zugehörigen Gerüstbauteils nicht erfüllend angesehen.

Zur Durchführung des erfindungsgemäßen Verfahrens sieht die Erfindung auch ein System zur Erfassung eines Aufbaus eines Gerüsts vor, umfassend:
Gerüstbauteile,
an den Gerüstbauteilen befestigbare oder befestigte RFID Elemente, wobei in den RFID Elementen vor oder nach ihrem Befestigen an den Gerüstbauteilen Artikelstammdaten betreffend das zugehörige Gerüstbauteil speicherbar sind,
zumindest ein transportabler RFID Leser, der zum Auslesen der in den RFID Elementen gespeicherten Artikelstammdaten innerhalb seiner Erfassungsreichweite ausgebildet ist, zumindest eine Rechnereinheit, die zur drahtlosen Kommunikation mit dem zumindest einen RFID Leser ausgebildet ist, wobei die Rechnereinheit einen Prozessor, einen Programmspeicher, einen Datenspeicher und eine Kommunikationsschnittstelle zur Kommunikation mit dem RFID Leser aufweist.

Bevorzugt ist der tragbare RFID Leser an der Arbeitskleidung des Gerüstbauers befestigbar oder in die Arbeitskleidung integriert, um den Gerüstbauer bei seiner schwierigen Arbeit nicht zu beeinträchtigen. Im optimalen Fall soll der Gerüstbauer den RFID Leser während seiner Arbeit gar nicht wahrnehmen.

Es ist bevorzugt, dass der RFID Leser als aktiver RFID Tag mit Antenne ausgebildet ist. Solche aktive RFID Tags sind mit einer eingebauten Stromversorgung, z.B. Batterien oder aufladbare Akkus versehen, wie auf dem Gebiet bekannt ist.

Es ist weiters bevorzugt, dass die RFID Elemente als passive RFID Tags ausgebildet sind. Solche passiven RFID Tags sind von einer Vielzahl von Herstellern lieferbar. Sie besitzen keine eigene Stromversorgung, sondern werden über das vom RFID Leser ausgestrahlte elektromagnetische Feld mit Energie zur Datenübertragung versorgt. Zudem sind passive RFID Tags klein, billig und robust.

Aktive und passive RFID Tags sind dem Fachmann wohlbekannt und bedürfen daher keiner näheren Erläuterung.

Bevorzugt verfügt der RFID Leser über ein Bedieninterface zur manuellen Eingabe von Daten. Dadurch kann der Gerüstbauer während des Aufbaus des Gerüsts Daten eingeben, die für die Erstellung des virtuellen Abbilds des Gerüsts nützlich sind, wie z.B. eine vom Standard abweichende Anordnung von Gerüstbauteilen in Bezug auf andere Gerüstbauteile.

Für die weitere Verwendung und Auswertung des erstellten virtuellen Abbilds des Gerüsts ist es vorteilhaft, wenn die Rechnereinheit dazu konfiguriert ist, über ein Computernetzwerk oder eine Datenfernverbindung mit einem Datenspeicher, vorzugsweise einem Cloud-Speicher, zu kommunizieren.

Die Erfindung sieht auch ein Computerprogramm vor, das Befehle umfasst, die bewirken, dass das erfindungsgemäße System die Schritte des erfindungsgemäßen Verfahrens ausführt, wenn das Computerprogramm in den Programmspeicher der Rechnereinheit geladen ist. Das Computerprogramm kann zur Verteilung und zur Ausführung in der Rechnereinheit auf Datenträgern gespeichert sein, es kann aber mittels eines Datenträgersignals übertragen werden.

Die Erfindung wird nun anhand von Ausführungsbeispielen unter Bezugnahme auf die Zeichnungen näher erläutert. In den Zeichnungen zeigen
Fig. 1 eine schematische Darstellung eines im Aufbau begriffenen Gerüsts gemäß der Erfindung;
Fig. 2 eine schematische Darstellung des erfindungsgemäßen Systems; und
Fig. 3 eine schematische Darstellung der Rechnereinheit und der darin ausgeführten Programme.

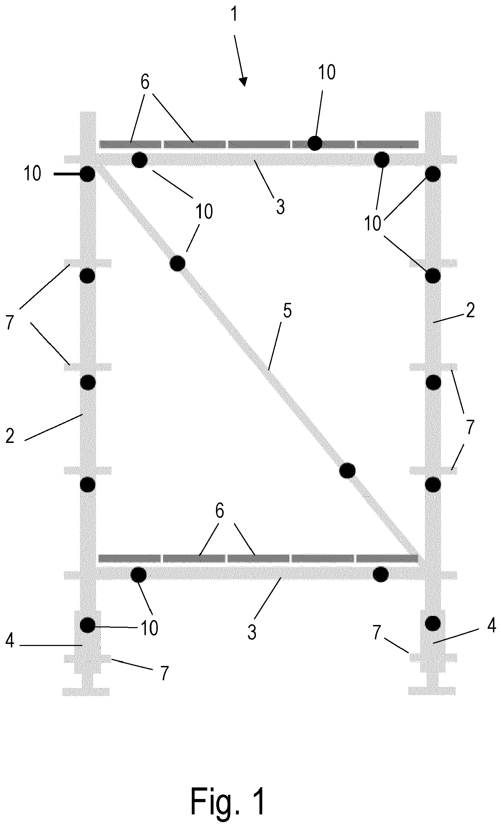

Unter Bezugnahme auf Fig. 1 wird zunächst ein im Aufbau befindliches Gerüst 1 beschrieben, wobei in Fig. 1 nur ein repräsentativer Ausschnitt des Gerüsts 1 gezeigt ist. Das Gerüst besteht aus verschiedenen Arten von Gerüstbauteilen 2-6, nämlich vertikal angeordnete Stiele 2, die mit horizontalen Riegeln 3 und einem Diagonalelement 5 verbunden sind, sowie auf den horizontalen Riegeln 3 aufgelegte Deckelemente 6 und Gerüstfüße 4, auf denen die Stiele 2 aufsitzen. Die Gerüstfüße 4 sind mit Spindeln versehen, um einen Höhenausgleich bei unebenen Untergründen zu schaffen. Obwohl in dieser Figur nur einige der möglichen Arten von Gerüstbauteilen zu sehen sind, versteht es sich, dass ein Gerüst 1 gemäß der Erfindung alle üblichen Gerüstbauteile umfassen kann, die je nach vorhandenen baulichen Gegebenheiten miteinander kombiniert werden können. Die Stiele 2, und die Gerüstfüße 4 sind mit Verbindungspunkten 7 versehen, die z.B. als Flansche ausgebildet sind, an denen andere Gerüstbauteile angeschlossen werden können. Die Abstände der Verbindungspunkte 7 voneinander sind standardisiert und betragen üblicherweise 0,5 m.

Die vertikalen Stiele 2, die horizontalen Riegel 3, die Gerüstfüße 4, das Diagonalelement 5 und die Deckelemente 6 sind mit RFID Elementen 10 versehen, in denen Artikelstammdaten über das jeweilige Gerüstbauteil gespeichert wurden. Zu bemerken ist, dass die Stiele 2, die horizontalen Riegel 3 und das Diagonalelement 5 jeweils mit mehreren RFID Elementen 10 ausgestattet sind, die an oder nahe den Verbindungspunkten 7 dieser Gerüstbauteile positioniert sind und zusätzlich zu den Artikelstammdaten über das Gerüstbauteil auch Informationen über den Verbindungspunkt 7 enthalten, bei dem sie angebracht sind. Die Gerüstfüße 4 und die Deckelemente 6 weisen nur ein RFID Element 10 auf. Typische Artikelstammdaten umfassen zumindest die Art des Gerüstbauteils und/oder seine Länge sowie optional administrative Daten, wie z.B. den Hersteller und das Produktionsdatum des Gerüstbauteils. Die RFID Elemente 10 sind als passive RFID Tags ausgebildet.

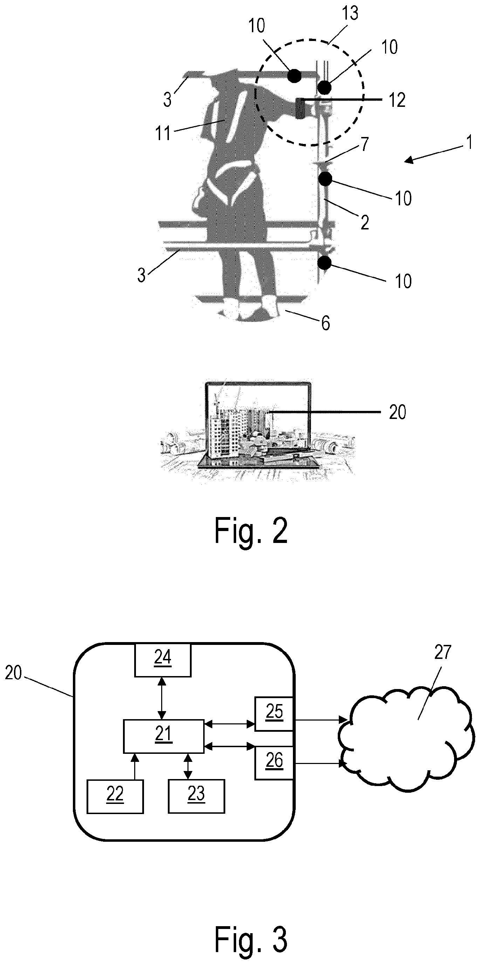

Fig. 2 zeigt schematisch den Aufbau des Gerüsts 1 durch einen Gerüstbauer 11. Der Gerüstbauer 11 steht auf einem Deckelement 6 und hat bereits vertikale Stiele 2 und horizontale Riegel 3 miteinander verbunden, die jeweils RFID Elemente 10 aufweisen, in denen Artikelstammdaten über das jeweilige Gerüstbauteil 2, 3 gespeichert sind. Der Gerüstbauer 11 trägt an seinem Arm einen RFID Leser 12, der dazu ausgebildet ist, die Artikelstammdaten aus jenen RFID Elementen 10 auszulesen, die sich innerhalb seiner Erfassungsreichweite 13 befinden. In diesem Ausführungsbeispiel ist der tragbare RFID Leser 12 in eine Manschette eingebaut, die sich der Gerüstbauer 11 um einen Unterarm gewickelt hat. Alternativ dazu kann der RFID Leser 12 auch direkt in die Arbeitskleidung des Gerüstbauers 11 eingebettet sein, beispielsweise in einen Handschuh. Der RFID Leser 12 ist als aktiver RFID Tag ausgebildet und so konfiguriert, dass seine Erfassungsreichweite 13 so gering ist, dass er von einem Gerüstbauteil 2-6 jeweils nur eine begrenzte Anzahl der RFID Elemente 10 gemeinsam erfassen kann.

Der RFID Leser 12 liest während des Gerüstaufbaus die innerhalb seiner Erfassungsreichweite 13 befindlichen RFID Elemente 10 permanent oder in vorgegebenen zeitlichen Abständen aus und überträgt die ausgelesenen Artikelstammdaten drahtlos an eine Rechnereinheit 20. Zusätzlich ist der RFID Leser 12 mit einem Bedieninterface, z.B. Tasten, zur manuellen Eingabe von Daten ausgestattet. Diese manuell eingegebenen Daten werden vom RFID LESER ebenfalls an die Rechnereinheit 20 übertragen. In weiterer Ausgestaltung der Erfindung kann der RFID Leser 12 in eine Vorrichtung ähnlich einem Smartphone integriert sein, wobei in der Vorrichtung Softwareapplikationen laufen und der Gerüstbauer 11 über ein berührungsempfindliches Display mit den Softwareapplikationen interagieren kann. Mithilfe dieser Softwareapplikation kann der Gerüstbauer 11 sämtliche das Gerüst 1 betreffende Informationen übermitteln und erhält selbst ebenfalls Informationen, wie einzuhaltende Rahmenbedingungen, die Anzahl der mit dem Gerüstaufbau beschäftigten Gerüstbauer 11, das Wetter, aktuelle Bilder des Gerüsts, des Bauwerks und der Umgebung, etc.

Wie in Fig. 3 schematisch gezeigt ist, weist die Rechnereinheit 20 einen Prozessor 21, einen Programmspeicher 22, einen Datenspeicher 23 und eine Kommunikationsschnittstelle 24 zur Kommunikation mit dem RFID Leser 12. Weiters kann die Rechnereinheit 20 eine Netzwerkschnittstelle 25 und/oder eine Schnittstelle 26 zur Datenfernverbindung, z.B. eine Funktelefonschnittstelle, zur Datenkommunikation mit einem Datenspeicher 27, insbesondere einem Cloud-Speicher, aufweisen. Die Rechnereinheit 20 kann beispielsweise ein Computer, ein Laptoprechner oder ein Smartphone sein.

Die Rechnereinheit 20 ermittelt die beim Aufbau des Gerüsts 1 verwendeten Gerüstbauteile 2-6 und ihrer Verbindung miteinander aus den von dem RFID Leser 12 empfangenen Artikelstammdaten und erstellt aus diesen Informationen ein virtuelles Abbild des Gerüsts 1. Das ermittelte virtuelle Abbild des Gerüsts 1 sendet die Rechnereinheit über die Netzwerkschnittstelle 25 und/oder die Schnittstelle 26 zur Datenfernverbindung an einen Datenspeicher 27, im vorliegenden Ausführungsbeispiel einen Cloud-Speicher, wo das virtuelle Abbild des Gerüsts für Analysen, Berichte, Prüfungen, etc. verwendet werden kann.

Beim Erstellen des virtuellen Abbilds des Gerüsts 1 führt die Rechnereinheit 20 Plausibilitätskontrollen durch, bei denen berücksichtigt wird, welche Arten von Gerüstbauteilen 2-6 miteinander verbunden werden können/dürfen und gegebenenfalls an welchen Verbindungspunkten 7 Gerüstbauteile 2-6 miteinander verbindbar sind und ob die erkannten Arten von Gerüstbauteilen 2-6 in zulässiger Lage im Gerüst 1 eingebaut sind. Bei der Erstellung des virtuellen Abbildes des Gerüsts werden nur jene Gerüstbauteile 2-6 berücksichtigt, die diese Kriterien erfüllen.

Das Prinzip der vorliegenden Erfindung ist es, dass die relative Position von Gerüstbauteilen 2-6 zueinander durch Auslesen ihrer Artikelstammdaten aus den RFID Elementen 11 erkannt wird. Bei der in Fig. 2 dargestellten Situation liest der RFID Leser 12 ein RFID Element 10 des Stiels 2 und ein RFID Element 10 des horizontalen Riegels 3 aus, woraus geschlossen wird, dass diese beiden Gerüstbauteile 2, 3 miteinander verbunden sind. Wenn die ausgelesenen Artikelstammdaten auch Informationen über die Positionierung der RFID Elemente 10 an den Gerüstbauteilen 2, 3 enthalten, wird die Erstellung des virtuellen Abbilds des Gerüsts 1 vereinfacht, es ist aber nicht zwingend erforderlich. Der Gerüstbauer 11 bewegt sich nämlich beim Aufbau des Gerüsts 1 im Gerüst 1, wodurch ständig verschiedene Gruppen von RFID Elementen 10 erfasst werden, die in der Erfassungsreichweite 13 des RFID Lesers 12 liegen. Aus diesen verschiedenen erfassten Gruppen von RFID Elementen 10 bzw. deren Artikelstammdaten lässt sich das Gesamtbild des Gerüsts zusammensetzen und ständig kontrollieren. Darüber hinaus kann der Gerüstbauer 11 manuell zusätzliche Informationen in den RFID Leser 12 eingeben, die für die Erstellung des virtuellen Abbilds des Gerüsts 1 hilfreich sind.

Damit nur solche Gerüstbauteile 2-6 erfasst werden, die bereits in das Gerüst 1 eingebaut sind, d.h. sich in Bezug aufeinander nicht oder nur geringfügig bewegen, werden die Artikelstammdaten in so kurzen zeitlichen Abständen mehrfach eingelesen und miteinander verglichen, dass die RFID Elemente 10 unbewegter Gerüstbauteile 2-6 mehrfach innerhalb der Erfassungsreichweite 13 des RFID Lesers 12 ausgelesen werden.

Die für die beschriebenen Plausibilitätsprüfungen erforderlichen Informationen über die Verbindbarkeit der Gerüstbauteile 2-6 und die möglichen Lagen der Gerüstbauteile 2-6 können in einer nicht dargestellten Datenbank gespeichert sein, auf die die Rechnereinheit 20 beim Erstellen des virtuellen Abbildes des Gerüsts 1 zugreift. Sie können auch in vordefinierten Algorithmen hinterlegt sein, die beim Erstellen des virtuellen Abbildes des Gerüsts 1 im Programmspeicher 22 der Rechnereinheit 20 gespeichert sind und vom Prozessor 21 ausgeführt werden. Schließlich können diese Informationen auch durch auf künstlicher Intelligenz beruhenden, insbesondere selbstlernenden Programmen, die in der Rechnereinheit 20 ausgeführt werden, erzeugt werden. Es sind auch Kombinationen der geschilderten Informationsbeschaffung möglich.

Das erstellte virtuelle Abbild des Gerüsts 1 bietet den Vorteil, dass über sämtliche Artikelstammdaten der Gerüstbauteile 2-6, die Positionierung aller verbauten Teile, der Fortschritt der Auf- bzw. Abbauaktivitäten und die Belegung bzw. Verwendung einzelner Gewerke zentral informiert werden kann. Jede Veränderung am Gerüst 1 wird mit dem erfindungsgemäßen Verfahren in Echtzeit registriert und im virtuellen Abbild abgebildet. Das virtuelle Abbild kann allen am Bauablauf beteiligten Firmen zentral zur Verfügung gestellt werden.

Zudem erhält der Bauherr vorzugsweise zusätzlich eine Fortschrittsmeldung. Die verantwortliche Baufirma kann sämtliche Gewerke koordinieren, die während des Bauablaufs auf das Gerüst 1 zurückgreifen und individuell an die Gewerke vermieten bzw. abrechnen. Die verantwortliche Baufirma erhält zudem vorzugweise Echtzeit-Informationen über die aktuell verbauten Gerüstbauteile 2-6, woraus auf die noch lagernden Gerüstbauteile geschlossen werden kann. Aufgrund der Echtzeit-Inventur können Gerüstbauteile immer dann nachbestellt werden, wenn sich das als notwendig erweist. Dadurch können Materialengpässe vermieden, aber auch Kosten gesenkt werden, die bei zu großer Lagerhaltung an Material entstehen würden. Aufgrund einer möglichen automatisierten Messung von Auf- bzw. Abbauzeiten, können die Leistungen individueller Aufbauteams oder Baufirmen verglichen und individuelle Key Performance Indikatoren erstellt werden. Dieser Daten können zur Angebotsoptimierung und Mannschaftsplanung herangezogen werden. Gerüsthersteller können zudem Sicherheitsnachweise auf Basis des virtuellen Abbilds erstellen und bauseitige Änderungen ohne Verzögerungen berücksichtigen. Firmen, die Leistungen im Bereich Auf- und Abbau des Gerüsts 1 erbringen, können in Echtzeit in den Bauablauf eingebunden werden und gegebenenfalls ihre Ressourcen anpassen. Gerüstbauteile 2-6 können zudem nicht mehr unbemerkt aus dem Gerüst 1 entfernt werden. Dadurch werden Einstürze vermieden. Jede Abweichung des zuvor ausgestellten Sicherheitsnachweises kann automatisch registriert und im virtuellen Abbild ersichtlich gemacht werden.

## Patentansprüche

1. Verfahren zur Erfassung eines Aufbaus eines Gerüsts (1), umfassend die Schritte:
Bereitstellen von Gerüstbauteilen (2-6),
Befestigen von RFID Elementen (10) an den Gerüstbauteilen (2-6), wobei in den RFID Elementen (10) vor oder nach ihrem Befestigen an den Gerüstbauteilen (2-6) Artikelstammdaten betreffend das zugehörige Gerüstbauteil (2-6) gespeichert werden,
Bereitstellen zumindest eines tragbaren RFID Lesers (12), der zum Auslesen der in den RFID Elementen (10) gespeicherten Artikelstammdaten innerhalb seiner Erfassungsreichweite (13) ausgebildet ist,
Bereitstellen einer Rechnereinheit (20), die zur drahtlosen Kommunikation mit dem zumindest einen RFID Leser (12) ausgebildet ist,
Aufbauen des Gerüsts (1) mit den Gerüstbauteilen (2-6) durch Gerüstbauer (11), wobei zumindest ein Gerüstbauer (11) mit dem RFID Leser (12) ausgestattet ist,
Auslesen der in den RFID Elementen (10) der Gerüstbauteile (2-6) gespeicherten Artikelstammdaten während des Aufbauens des Gerüsts (1) und Übertragen der ausgelesenen Artikelstammdaten an die Rechnereinheit (20),
Ermitteln der beim Aufbau des Gerüsts (1) verwendeten Gerüstbauteile (2-6) und ihrer Verbindung untereinander aus den von dem zumindest einen RFID Leser (12) empfangenen Artikelstammdaten und Erstellen eines virtuellen Abbildes des Gerüsts (1) aus den ermittelten Gerüstbauteilen (2-6) mittels der Rechnereinheit (20).

2. Verfahren nach Anspruch 1, **gekennzeichnet durch** das Bereitstellen des virtuellen Abbildes des Gerüsts zur weiteren Verwendung und Auswertung in einem über ein Computernetzwerk oder eine Datenfernverbindung zugänglichen Datenspeicher (27), vorzugsweise einem Cloud-Speicher.

3. Verfahren nach Anspruch 1 oder 2, **dadurch gekennzeichnet, dass** die Artikelstammdaten zumindest die Art des Gerüstbauteils (2-6) und/oder seine Länge sowie optional administrative Daten, wie z.B. den Hersteller und das Produktionsdatum des Gerüstbauteils umfassen.

4. Verfahren nach einem der vorhergehenden Ansprüche, **dadurch gekennzeichnet, dass** zumindest einige der Gerüstbauteile (2-6) mit mehreren RFID Elementen (10) versehen werden, die an oder nahe von vordefinierten Verbindungspunkten (7) der Gerüstbauteile (2-6) mit anderen Gerüstbauteilen (2-6) angeordnet werden, wobei optional eine Kennzeichnung des Verbindungspunkts (7), dem das RFID Element (10) zugeordnet ist, in den Artikelstammdaten des RFID Elements (10) hinterlegt wird.

5. Verfahren nach Anspruch 4, **dadurch gekennzeichnet, dass** die Erfassungsreichweite (13) des RFID Lesers (12) so konfiguriert ist, dass er jeweils nur eine begrenzte Anzahl, beispielsweise nur eines, von mehreren an einem Gerüstbauteil (2-6) angebrachten RFID Elementen (10) erfassen kann.

6. Verfahren nach einem der vorhergehenden Ansprüche, **dadurch gekennzeichnet, dass** beim Erstellen des virtuellen Abbildes des Gerüsts berücksichtigt wird, welche Arten von Gerüstbauteilen (2-6) miteinander und gegebenenfalls an welchen Verbindungspunkten (7) verbindbar sind und in welcher Lage die Arten von Gerüstbauteilen im Gerüst eingebaut werden können, wobei bei der Erstellung des virtuellen Abbildes des Gerüsts nur jene Gerüstbauteile berücksichtigt werden, die diese Kriterien erfüllen.

7. Verfahren nach Anspruch 6, **dadurch gekennzeichnet, dass** die Information über die Verbindbarkeit der Gerüstbauteile (2-6) und die möglichen Lagen der Gerüstbauteile in einer Datenbank gespeichert ist, auf die beim Erstellen des virtuellen Abbildes des Gerüsts zugegriffen wird, und/oder dass diese Information in vordefinierten Algorithmen hinterlegt ist, die beim Erstellen des virtuellen Abbildes des Gerüsts in der Rechnereinheit (20) ausgeführt werden, und/oder dass diese Information durch auf künstliche Intelligenz beruhenden, insbesondere selbstlernenden Programmen, die in der Rechnereinheit (20) ausgeführt werden, erzeugt wird.

8. Verfahren nach einem der vorhergehenden Ansprüche, **dadurch gekennzeichnet, dass** beim Erstellen eines virtuellen Abbildes des Gerüsts aus den ermittelten Gerüstbauteilen (2-6) nur solche Gerüstbauteile berücksichtigt werden, die sich in Bezug aufeinander nicht wesentlich bewegen, was vorzugsweise durch mehrfaches Einlesen der Artikelstammdaten im zeitlichen Abstand und Vergleich der eingelesenen Artikelstammdaten festgestellt wird.

9. System zur Erfassung eines Aufbaus eines Gerüsts, umfassend:
Gerüstbauteile (2-6),
an den Gerüstbauteilen (2-6) befestigbare oder befestigte RFID Elemente (10), wobei in den RFID Elementen (10) vor oder nach ihrem Befestigen an den Gerüstbauteilen Artikelstammdaten betreffend das zugehörige Gerüstbauteil (2-6) speicherbar sind,
zumindest ein transportabler RFID Leser (12), der zum Auslesen der in den RFID Elementen (10) gespeicherten Artikelstammdaten innerhalb seiner Erfassungsreichweite (13) ausgebildet ist,
zumindest eine Rechnereinheit (20), die zur drahtlosen Kommunikation mit dem zumindest einen RFID Leser (10) ausgebildet ist, wobei die Rechnereinheit (20) einen Prozessor (21),
einen Programmspeicher (22), einen Datenspeicher (23) und eine
Kommunikationsschnittstelle (24) zur Kommunikation mit dem RFID Leser (12) aufweist, wobei das System dazu konfiguriert ist, die Schritte des Verfahrens gemäß einem der Ansprüche 1 bis 8 auszuführen.

10. System nach Anspruch 9, **dadurch gekennzeichnet, dass** der tragbare RFID Leser (12) an der Arbeitskleidung des Gerüstbauers (11) befestigbar oder in die Arbeitskleidung integriert ist.

11. System nach Anspruch 9 oder 10, **dadurch gekennzeichnet, dass** der RFID Leser (12) als aktiver RFID Tag mit Antenne ausgebildet ist.

12. System nach einem der Ansprüche 9 bis 11, **dadurch gekennzeichnet, dass** die RFID Elemente (10) als passive RFID Tags ausgebildet sind.

13. System nach einem der Ansprüche 9 bis 12, **dadurch gekennzeichnet, dass** der RFID Leser (12) über ein Bedieninterface zur manuellen Eingabe von Daten verfügt.

14. System nach einem der Ansprüche 9 bis 13, **dadurch gekennzeichnet, dass** die Rechnereinheit (20) dazu konfiguriert ist, über ein Computernetzwerk oder eine Datenfernverbindung mit einem Datenspeicher (27), vorzugsweise einem Cloud-Speicher, zu kommunizieren.

15. Computerprogramm, umfassend Befehle, die bewirken, dass das System der Ansprüche 9 bis 14 die Schritte des Verfahren gemäß einem der Ansprüche 1 bis 8 ausführt, wenn das Computerprogramm in den Programmspeicher (22) der Rechnereinheit (20) geladen ist.

16. Datenträger, auf dem das Computerprogramm gemäß Anspruch 15 gespeichert ist.

17. Datenträgersignal, das das Computerprogramm gemäß Anspruch 15 überträgt.
